(19) Europäisches Patentamt
European Patent Office
Office européen des brevets

(11) Publication number: **0 256 908**
**A1**

(12) **EUROPEAN PATENT APPLICATION**

(21) Application number: **87401677.7**

(22) Date of filing: **16.07.87**

(51) Int. Cl.[4]: **C 23 C 22/74**
C 09 D 5/08

(30) Priority: **16.07.86 US 886906**

(43) Date of publication of application:
**24.02.88 Bulletin 88/08**

(84) Designated Contracting States:
**AT BE CH DE ES FR GB GR IT LI LU NL SE**

(71) Applicant: **SERMATECH INTERNATIONAL INC.**
**155 South Limerick Road**
**Limerick PA 19468 (US)**

(72) Inventor: **MOSSER, Marck F.**
**485, Washington Avenue**
**Sellersville, Pennsylvania 18960 (US)**

**FABINY, William J.**
**1105, Continental Drive**
**Harleysville, Pennsylvania 19438 (US)**

(74) Representative: **Gutmann, Ernest et al**
**S.C. Ernest Gutmann - Yves Plasseraud 67, boulevard Haussmann**
**F-75008 Paris (FR)**

The title of the invention has been amended (Guidelines for Examination in the EPO, A-III, 7.3).

(54) **Composition and process for coating metallic parts and coated parts.**

(57) The invention relates to an aqueous acidic phosphate solution for heat curable coatings and for imparting long-term improved corrosion resistance especially to active metal surfaces, which acidic solution includes as essential components : (a), a water-soluble phosphate acidic salt and (b) a polymeric resin, which resin is in solution or in dispersion in the acid phosphate solution.

This composition is useful for the product of coatings on metal parts, said coatings having improved long-term corrosion resistance and improved physical properties.

EP 0 256 908 A1

**Description**

IMPROVED COATED PARTS, COATING AND METHODS OF APPLICATION

This invention relates to new and improved coating compositions, coated parts, especially parts made of active metal, such as cadmium, zinc or aluminum which are coated with the coating compositions of the invention.

The invention also relates to ferrous and other base metal parts which are coated with active metals including zinc, aluminum, and cadmium coated in turn with the coatings of the invention. Typical are zinc-coated steel fasteners.

The coated parts have an improved combination of properties, namely improved resistance to harsh and demanding environmental conditions and have improved physical properties such as resistance to cracking, impact, tensile strength, formability and very satisfactory adhesion.

The invention provides a coating composition of an aqueous solution of inorganic phosphate salts and a polymeric resin (synthetic or not) which may be soluble or insoluble in the aqueous solution.

The invention provides the above referred to acid aqueous phosphate solution which includes a corrosion inhibitor which is in a defined quantitative relationship with the phosphate salts.

In one aspect of the invention, the aqueous composition is free of reducing agent which can reduce the hexavalent chromium to a lower valence.

The invention further provides the above referred to acid aqueous phosphate solution which includes a leachable corrosion inhibitor which may be a chromate or other defined ion.

The invention further provides active metal surfaces coated with these and other further described herein compositions.

The invention further describes various methods for applying these aqueous acidic phosphate coating compositions to appropriate metal bases.

The invention further provides other aspects and embodiments which are described hereinafter.

The parts coated with the coating of the invention, and the coatings fulfill a real industrial and practical need, especially for difficult to coat metal surfaces.

The coatings of the invention comprise aqueous acidic phosphate solutions and organic resins which may be suspended, dispersed, or dissolved in said acidic phosphate solution.

Additionally, corrosion inhibitors can be part of the compositions. Suitable inhibitors include molybdate, chromate, and other corrosion inhibitive additives.

The parts coated with the coatings of the invention need not receive another coating of paint; the coatings are not merely primers.

The coatings of the invention are not conversion coatings. They have none of the characteristic features of what is called a "conversion coating", as explained further below.

The coatings of the invention are particularly noteworthy in that they impart remarkably improved corrosion resistance. These coatings also obviate the need of subsequent painting operations.

It is well known to fabricate articles of zinc and aluminum and their alloys to utilize the special properties of these metals. Both metals have relatively low melting points and are easy to cast. Alloys of both metals are corrosion resistant in many environments but are still not adequate to meet the present industrial demands of corrosion resistance.

In addition, these active metals are galvanically more active than steel. That is, when coupled or joined to steel in a corrosive environment, the aluminum, zinc, or cadmium metal surface corrodes and the steel is protected from corrosion. The galvanically active metal is the anode and corrodes while the steel which is the cathode is protected. This concept is used to improve the corrosion resistance of steel. Layers of these more active metals are plated, clad, or otherwise formed on the steel surfaces. These coatings, called sacrificial coatings, improve the performance of steel. It is, thereofre, common to coat articles with zinc by electroplating, immersion in molten zinc, e.g. galvanizing, mechanical plating, and by cladding. Similarly coatings of cadmium are commonly produced by electroplating and mechanical plating. Aluminum is often applied by ion vapor deposition, specialized non aqueous plating processes, inorganic coatings, and mechanical plating. Since these coatings are designed to protect steel, the coatings must be preserved for long lasting protection.

There are a wide variety of processes available to treat these active metals to improve corrosion resistance. Foremost among these treatment processes are chromate conversion coatings. These coatings react with the metal surfaces resulting in improved corrosion resistance. These coatings are especially suited for the application of additional paint films to achieve improved adhesion as well as improved corrosion resistance. Yet these conversion coatings still have technical drawbacks which make their corrosion resistance inadequate enough for important applications.

The term "conversion coating" applies to the coatings produced on metal surfaces by reaction of their external atomic layers with anions of a suitably selected medium:

$$mM + nA^{z-} \rightarrow M_m A_n + nze$$

where "M" is a metal reacting with the medium, "A" is the metal anion, "m" and "n" are each a whole integer and "e" represents an electron.

Thus, the process of formation of the conversion coating is an artificially induced and controlled corrosion

process yielding on the metal surface a layer firmly bonded to the basic metal, practically insoluble in water and the given medium, and having electrical insulating properties.

This shows that the conversion coating, unlike coatings applied, for example, by electrodeposition, is produced on the metal surface with the direct participation of the basic metal in the process.

The method for obtaining and applying conversion coatings traditionally involves the following:

(a) Methods involving simple immersion of the treated articles in the reactive solution.

(b) Methods consisting in spraying the solution onto the metal surface.

(c) Methods consisting in covering the treated metal with a concentrated reactive solution.

There is a wide variety of chromate treatments or conversion coatings available in a variety of colors. For example, for zinc, a treatment consists of a "clear" dichromate with imparts a bluish tone to the zinc surface. There is a thicker treatment producing a yellow iridescent color. Finally, there are heavy olive drab to black coatings available. All these processes are designed to improve the corrosion resistance of the active metals.

For steel fasteners plated with zinc, the clear bright color of the zinc is never seen sinc all plating receives one of the described treatments. Unfortunately, the brightest color achievable is the "clear" chromate which offers the least corrosion resistance. In comparison, the greatest corrosion resistance is achieved with the darker chromate treatments, many of which are not aesthetically pleasing. Even with the clear chromate treatment, corrosion resistance as measured by hours to red rust in the ASTM B117 salt spray test is relatively poor, often 100-150 hours or less for 5-10 micron thick plating.

In addition to offering inadequate corrosion resistance and less than desirable colors, these chromate treatments often do not offer satisfactory performance as paint bases. This occurs because zinc, aluminum, and cadmium surfaces are galvanically active and in the presence of rain and other condensation along with pollution they become chemically more active and the metallic surfaces corrode under the paint causing debonding and paint loss. This leads to additional spread of corrosion.

A variety of other processes is known to treat these active metals. Many contain acidic chromate, trivalent chromium and a widely varying additional ingredients. A variety of typical formulations are given in Metal Surface Treatement - Chemical and Electro Chemical Surface Conversions, editor M.H. Gutcho, Noyes Data Corporation, Park Ridge, New Jersey, 1982, and Electrolytic and Chemical Conversion Coatings, Biestek and Weber, Portullis Press, Ltd. Redhill, Surrey, U.K., 1976.

Other conversion coatings include phosphating processes in which acidic phosphate compositions containing oxidizing salts react with ferrous alloys resulting in the formation of iron, zinc, or other single or mixed phosphates on the metal surface. The nature and composition of these conversion coatings are functions of the coating bath composition, the nature of the metal being phosphated, the rate of attack of the metal by the free acids present, the rate of ionic diffusion as affected by the mode of use, and the bath temperature. The films as deposited tend to be water-insoluble, highly crystalline and hydrated alkaline phosphates. A further description of the process is found in Phosphating of Metals, Guy Lorin, published by Finishing Publications Ltd., Middlesex, England, 1974.

Conversion coatings in general have found extensive applications. They are used mainly for purpose of corrosion protection. However, owing to the high porosity most of them require additional sealing treatment. This may be carried out by the application of special solutions (e.g., in the case of oxide coating on aluminum), mineral oils, greases or paint. In that case conversion coatings improve considerably the adhesion of paint coatings to the metal substrate and prevent the spreading of undercoat corrosion in the event of local coating damage.

The second extensive application of conversion coatings is in the cold working of metals (phosphating, oxalate coatings). In that case the conversion coating plays the role of lubricant which decreases friction and enables application of higher loads. Phosphate coatings have also found application as anti-friction (anti-seizing) coatings.

Thus the coatings of the invention herein disclosed are different from corrosion coatings and fulfill needs as yet not met by conversion coatings.

United States patents which have been noted in a search including the following:

No. 3,785,854 to Baldi discloses a chromium diffusion coating containing essentially aqueous solution of chromic and phosphoric acid, magnesium salts of said acid and dispersed polytetrafluoroethylene particles.

No. 3,514,304 to Binnis discloses corrosion-inhibiting surface coating compositions which are essentially primers. Titanium dioxide pigment particles are coated with triisopropanolamine or benzoates or with the phosphate of trialkanolamines. An improved pigment product is disclosed which is used in primer coatings to avoid the problems associated with the use of high color pigments.

No. 3,717,509 to Palm et al discloses the conventional coating available under the name of "Zincrometal". The patent discloses a composite coating which includes a residue obtained by applying to the surface a hexavalent-chromium-containing coating composition which contains a reducing agent therefore and which was heated to vaporize volatile substituents. This undercoating is covered with a top coat from an applied top coat composition which includes a particulate, electrically conductive pigment such as zinc.

No. 3,658,603 to Boyer discloses a coating which contains magnesium cations, and other anionic polymeric chains of chromium, oxygen and phosphorous atoms.

No. 3,462,319 to Campbell discloses an aqueous coating solution which contains chromate and phosphate. On the chromic acid - phosphoric acid coating solution on the metal surface, there is applied

an organic film-forming material such as an acrylic resin. Following the application of the film-forming material, the film is then cured by heating or baking.

No. 3,869,293 is concerned with an aqueous solution of metal, chromate, dichromate or molybdate and phosphate.

No. 3,713,904 discloses an organic resin coating on a metal substrate. The coating is constituted of an organic resin, an inorganic hexavalent chromium compound which is reacted to reduce the hexavalent chromium to trivalent chromium, phosphoric acid and strontium chromate. The aqueous mixture is identifiable by the absence of detectable hexavalent chromium before application to the metal substrate. The coating is heated to a temperature from about at least 600°F to about 800°F so that the metal temperature is at least 450°F. The coating liquid also contains an organic solvent with an organic resin such as an epoxy, alkyds or organosols.

No. 4,411,950 to Smith discloses an acidic aqueous coating composition containing dispersed particles of resins and chromium ions. The coating is autophoretically deposited on the metal surface. The resins which are dispersed in the chromium solution include various organic synthetic resins such as polyethylene. The resinous coating is disclosed to have a high degree of surface slip with no significant sacrifice in corrosion resistance.

No. 4,084,014 to Fabregas is a composition for sealing aluminum layers with an aqueous composition which includes phosphate ions, trivalent chromium, and an emulsified organic resin. In the aqueous composition the chromium compound is reduced to trivalent chromium by a redox reaction, as is shown by the color of the solution which becomes green. Enough reducing agent is present to be completely consumed in the redox reaction.

No. 3,053,702 to Schuster et al discloses a coating composition constituted of dichromate, a reducing agent for the chromate and a dispersion of aresin such as polytetrafluoroethylene. When the curing is complete a large proportion of the hexavalent chromium has become converted to trivalent chromium.

No. 3,053,693 to Schuster et al discloses a coating composition which contains a resin and a chromium compound. A reducing compound is present to reduce the major proportion of the chromium to within the specified range. The drying of the coating is not over 400°F in order to preserve the resin. The coating is particularly designed to increase the adhesion of paints to metals.

No. 4,373,968 to Hess discloses an aqueous solution for coating metallic substrates which consists essentially of hexavalent chromium, reduced chromium, a wetting agent and dispersed acrylic resin solids. The improvement resides in the inclusion of the wetting agent to deter an excessive chromium build-up. The aqueous concentrate with $Cr^{+6}$ to reduced $Cr^{+3}$ tends to gel on standing. To reduce the gelling tendency, a small amount of phosphoric acid is recommended for the concentrate.

No. 4,006,041 to Fabregas discloses a coating which is suitable for an adhering surface for paint. The coating solution includes primary phosphates of certain metals such as zinc, manganese, iron or lead, an organic reducing agent to reduce the resulting composition through the addition of chromic acids or salts to produce a solution of trivalent chromium ions. Insoluble organic polymers which are thermoset are used in the treating material, particularly acrylics. The patent reports that the coating may perform the function both of the phosphating agent as well as that of a first coat of paint.

No. 3,634,353 to Strolle discloses a primer composition which includes particulate fluorocarbon polymer, monobasic calcium phosphate, phosphoric acid and a liquid carrier, like water. Preferably the metal to be coated is pre-treated by grit-blasting or other equivalent means.

No. 3,352,814 discloses a phosphate chromate aqueous binder liquid which may include a limited amount of polytetrafluoroethylene.

No. 4,266,988 discloses an aqueous chromate solution which contains hexavalent chromium but no trivalent chromium together with fluorobroic acid, hydrofluoric acid and certain metal oxides such as zinc or magnesium oxides or hydroxides such as magnesium hydroxide or aluminum sulfate.

All the above patents referred to are incorporated herein by reference.

It will be helpful to describe how the coatings, the coated parts, the process of the inventon and other aspects thereof distinguish over the known coating art.

It will be noted from the review of the prior art that notwithstanding the comparatively large number of disclosures of phosphate and/or chromate solutions and of resin dispersions for coatings, there is no disclosure of an acidic solution for coating containing essentially only a water-soluble phosphate salt and an insoluble or soluble polymer synthetic (or non-synthetic) resin or an acidic coating solution containing a phosphate salt, an insoluble or soluble polymer resin and an inhibitor. Many of the citations from the prior art are for conversion coatings on aluminum, zinc, and ferrous alloys. As previously described, conversion coatings require reaction with the substrate metal by the coating solution.

In the conversion coatings it is essential that the basic metal react to form an oxide, phosphate, oxalate or other metal reaction product between the metal basic layers and the coating solution applied. Unlike conversion coatings where the basic metal must chemically interact, no such reaction is needed in the described invention for a firmly bonded coating to be obtained. Also since the basic metal must be reactive, conversion coatings are not useful to inert substrates, like stainless steel, ceramic, or titanium with which no reacton is expected.

Typically on an aluminum substrate a conversion coating will contain chromate, fluoride or nitrate ions. During immersion in the coating liquid, aluminum ions react and become part of the solution causing

chromate reduction on the surface of the aluminum metal. The conversion coating contains $Al_2O_3.XH_2O$; $Cr_2O_3.XH_2O$; and $Cr^{+6}$ in some form as well as other ingredients. The total final film is very thin, water-insoluble, and dielectric. Similarly phosphating baths require interaction of a coating liquid with a metal substrate for the coating process to occur.

In contrast, coatings of the invention can be applied to any substrate. The coating formed will be the same regardless of the metal to which is it is applied. Because of the prior art difficulties in obtaining corrosion resistance on certain active substrates like zinc, the present invention is especially useful (but not exclusively) for such metals.

Moreover, whereas conversion coatings or wash primers do not call for a heat treatment for curing the coatings (or for the reaction described to occur), the present invention calls for a curing step which causes certain reactions further described hereinafter. One important aspect of the curing step is that it causes a bonding of the phosphate in accordance with at least partial reaction as shown below, which reaction shows the conversion of orthophosphates to pyrophosphates, both acid pyrophosphates and normal pyrophosphates.

(1) $2H_2PO_4^{-1} \xrightarrow{\text{heat}} H_2P_2O_7^{-2} + H_2O$

(dihydrogen orthophosphate) → (dihydrogen pyrophosphate or acid pyrophosphate)

(2) $2HPO_4^{-2} \xrightarrow{\text{heat}} P_2O_7^{-4} + H_2O$

(hydrogen orthophosphate) → (pyrophosphate)

The coated metal is exposed to a curing temperature (further described below) and the part with the cured coating may be further exposed to higher temperatures.

The primary coating is cohesively bonded by these phosphate bonds. The phosphate acidic salts applied to the substrate are water-soluble until subjected to the cure to produce the reaction products shown above. In contrast, phosphating in accordance with conventional art which will deposit neutral and alkaline salts which are at least partially degraded by curing at temperatures called for by the invention.

Metal parts to be advantageously covered by the composition of the invention are the following : cadmium plated steel fasteners, ferrous fasteners coated with ion vapor deposited aluminum, zinc die castings, zinc plated ferrous screws, aluminum/ceramic coated steel fasteners and galvanized steel.

It has now been discovered in accordance with a preferred aspect of the invention, that aqueous compositions which are constituted only of phosphate solutions and soluble or insoluble polymeric synthetic or non-synthetic resins give unexpectedly highly improved corrosion resistant coatings when applied to active metal surfaces referred to above.

In addition, because of the addition of the resin containing component, several unexpected improvements are seen. First, adhesion of the cured film to the substrate is enhanced by the use of the second bonding form, e.g., the resin. Second, this adhesion improvement does not interfere with the bonding of the phosphate components. Third, the film becomes less brittle and more formable.

A second broad embodiment of the invention comprises an aqueous acidic phosphate solution and one or more acid soluble organic resins. Such an addition unexpectedly improves the ease of application of the coating composition. When thermally cured, the included polymer may be partially or completely thermally degraded and therefore not an essential part of the coating. the coating on the metal surface is then constituted essentially of the phosphate salt (as described above) and the thermally degraded polymer residue, if any.

In the third preferred embodiment of the invention, it is recommended that in addition to the acidic aqueous phosphate, a corrosion inhibitor be used. An inhibitor is defined in Materials Performance 25, pages 63-64, January, 1986, as a "chemical substances or combination of substances which, when present in the environment, prevents or reduces corrosion without significant reaction with the components of the environment". In accordance with the invention a corrosion inhibitor is optional but useful on certain substances that are highly reactive with respect to acidic phosphate ions including active pigments and substrate materials.

In certain compositions made in accordance with this invention, the corrosion inhibitor can be chromate or dichromate ion. This is distinguished over the prior art in that the bond-forming phosphate ion is always present in a greater molar concentration than the chromate ion. This contrasts with the prior art which generally uses only a small amount of phosphate in the compositions. The same relationship between these ions applies also in their concentration in the coating itself.

Moreover, where the prior art generally used chromium salts, it was found desirable if not necessary to have the chromium in the trivalent state as opposed to hexavalent state and the art emphasizes the importance of the reduction to a valency lower than hexavalent. This reduction is commonly done to decrease water solubility and decrease cure temperature and time. In contrast, in accordance with the invention, if chromium is employed it will be and remains primarily in the hexavalent state. Thus the coating composition of the invention are free of added reducing compounds which could reduce the chromium from the hexavalent to a lower valence number.

Moreover, a review of the art does not show such a aqueous composition wherein (if there is any chromium present) any chromium present is virtually only in the hexavalent state and is in limited proportion, with respect to the phosphate salt. Also, there is no cured coating made from such an aqueous phosphate solution which is disclosed in the prior art. Nor is there any disclosure of such an aqueous phosphate solution which is applied on an active metal such as zinc, aluminum or cadmium, as is provided in the present invention.

It should be noted that in U.S. Patent No. 4,532,289, there is disclosed an aqueous composition of chromate and phosphate. These compositions include also polyvinylidene fluoride resin. Unlike those compositions the present composition, of the invention need not include the chromate and if chromate is used, it is predominatly non-reduced, i.e. in the hexavalent state in the proportions specified.

Moreover, it has been discovered in accordance with the invention that the type of resins that can be used has been significantly expanded from polyvinylidene fluoride resins to other resins as disclosed herein.

The metal surfaces which are contemplated to be coated in accordance with the invention are active metal surfaces of aluminum, cadmium, zinc and their alloys or surfaces which contain these active metals or their alloys. When zince surfaces are to be coated, they can be zinc electroplated, mechanical zinc, galvanized steel, zinc containing coatings including zinc rich paints, zinc flake/chromate and zinc flake/resin type coatings and zinc die castings.

When cadmium surfaces are to be coated in accordance with the invention these include, for instance, cadmium electroplated and cadmium mechanically plated surfaces.

When aluminum or aluminum alloys surfaces are to be coated in accordance with the invention these may be wrought or cast aluminum alloy surfaces, aluminum plated surfaces, aluminum filled coatings such as described in U.S. Patent 3,248,251 (Example 7), ion vapor deposited aluminum or hot dipped coatings such as aluminized steel or aluminum/zinc coating such as "Galvalume" or alloy platings containing these active metals mainly the aluminum, cadmium or zinc. Other alloy platings or claddings such as zinc/nickel, zinc/manganese, zinc/tin, or zinc/cadmium are also suitable substrates.

In accordance with the invention the coating may be applied over an untreated active metal article to be coated or alternatively, the article to be coated may have been treated with a variety of traditional pre-treatments including alkaline cleaning, vapor or other solvent degreasing. However, what is noteworthy in accordance with the invention is that there is no need for a mechanical or other treatment which changes or enhances the profile of the surface to increase the surface area. Therefore, as disclosed herein no abrasive blasting or grit blasting is necessary prior to applying the coating of the invention. All that is needed is that the metal surface be clean, free of oil, greases or other like contaminants.

The aqueous phosphate solution of the invention may be applied by any of the known methods in addition to the method more particularly suited to the application of the acid phosphate coating which is described further below. The compositions may be applied by conventional spray, dip, dip/spin, flood, curtain, coil and/or roller application.

Of particular interest is the application of these coatings to zinc plated fasteners using dip/spin methods followed by thermocuring, especially when the coating composition is an acid phosphate thixotropic composition.

In accordance with the invention the aqueous phosphate acid composition must contain acidic phosphate salts. These may originate from phosphoric acid, acid and hydrated metal salts or any phosphate which disolves in the acid to produce metallic phosphate salts. Preferred phosphate sources include phosphoric acid, metaphosphoric acid, magnesium, zinc, and aluminum acid phosphate. The metallic phosphate may be generated in situ by the reaction of phosphoric acid with metallic oxides, hydroxides, carbonates or more basic phosphates as is known in the prior art. While other phosphates may be used, compositions based primarily on alkali metal phosphate, including ammonium phosphates are generally not preferred.

In accordance with the invention the metallic phosphate solution is conbined with an organic synthetic water-soluble or insoluble polymeric resin. A wide range of polymers may be used including the following typeical polymers, which are only illustrative.

1. Polyethylene Dispersions
Allied Chemical AC540/680
Kramer Chemical Poly-K-3-629
Poly-K-3-656

2. Vinyl Acetate/Acrylic Copolymer Emulsions
Union Chemicals AMSCO 3077
Borden Chemical Polyco 2151

3. Vinyl Chloride/Acrylic Latex
B F Goodrich Geon 450 x 20

4. Acrylic Latex

Union Carbide UCAR 4362
UCAR 4550
5. Polyvinylidene Fluoride Resin
Pennwalt Kynar 32 latex
Kynar 301F powder
Kynar ES

It is further anticipated that a wide variety of polyolefin grades are suitable resins to be used in compositions of this invention. This includes polyethylene powders of various molecular weights as well as polypropylene, polybutylene, polybutadiene and others obvious to one skilled in the art. Various resin forms can be used. Additionally, it is anticipated that other resins such as polyvinylidene chloride resin, epoxy resins, various modified silicone resins as well as cathodic electrocoating resins are usable.

In addition to particulate resins consisting of latexes, emulsions, dispersions and dry powders that are essentially insoluble in the aqueous acid solution, soluble resins can be employed such as:

1. Henkel Rheothik 80-11 - synthetic sulfonate (17.5% sol.)
2. Hercules Natrosol 250MBR - hydroxyethyl cellulose
3. Kelco Kelzan S - xanthan Gum
4. York Advis W - polysaccharide
5. Kelco Keltex Algin - sodium alginate
6. Henkel MX # 13130 - synthetic sulfonate
7. Mona AT1200 (41% sol.) - synthetic biodegradable polymer (Mona Industries).

In accordance with the invention it is highly preferable that the resin used be stable in the acid phosphate solution. When it is desired that the resin remain dispersed it is best if a surfactant is used. Typical surfactants to be used will vary with the resin. Nonionic and anionic surfactants are useful providing they are stable in low acid pH values i.e. about 4 and below, and be uneffected by trivalent ions (phosphate).

However, it is not necessary that the polymer be water-insoluble. It is indeed an unexpected aspect of the invention that in one of the simplest embodiments of the invention there be used a phosphate salt solution including a water-soluble polymer.

When it is an emulsion of the polymer which is contemplated by the invention, the particle size of the resin is generally small, less than about 5 microns or generally less than 1 micron as is generally supplied as a latex and/or an emulsion. However in some applications larger particle sizes of resins have been found to be suitable. In such cases the particle size can exceed even 75 microns (200 mesh).

In accordance with the invention as has been disclosed herein, the coating compositions once applied to the metal substrate require a thermal cure. This, as has been noted above, is a distinguishing aspect of the process which differentiates it from wash primers and conversion coatings. This distinguishes also the coatings which are thus the product of a thermal cure. The time and temperature of the cure is generally not above 600°F (about 316°C). This temperature effectuates the curing of the phosphate and of the polymer. While zinc and aluminum castings generally are not cured at a temperature above 500°F, surfaces coated with zinc plate preferably do not exceed 550°F (about 288°C). Products plated with cadmium should generally not exceed about 600°F (about 316°C) to avoid diffusion of the cadium.

It is preferred not to use higher curing temperatures for the respective metals as this is likely to cause adverse reactions and not optimum coatings. In accordance with the invention this curing temperature also causes a progressive thermal dehydration of the phosphate salts and condensation to form polymeric structures. Typically formed are acid pyrophosphate structures which are primarily water-insoluble.

As discussed above, the curing at the limits indicated above, namely, about 600°F, 550°F and 500°F cause changes in the structure of the phosphate. These changes are seen at intermediate temperatures such as about 482°F (about 250°C) or even lower temperatures. The conversion of the phosphate and progressive thermal dehydration to the polymeric phosphate structure does not degrade the bonding or structure of the coating. The higher temperature causes the complete curing and bonding of the phosphate and the resin to the active metal substrate. The effect of the thermal treatment on the phosphate salts which is believed to take place, may be described in further details as follows.

At the lower temperature ranges, such as up to about 320-475°F, the phosphates are converted at least in part to partially dehydrated orthophosphates. After significant exposure to a temperature in the 325-375°F range, it is generally considered that an appreciable amount, if not the major proportion of the phosphates have been converted to orthophosphate (e.g. dihydrophosphates: $H_2PO_4^{-1}$ or $H_2PO_4^{-2}$ without appreciable additional water content. These are stable and water-insoluble. As the temperature to which the coating is exposed increases into the 375°F to about 485°F range, especially in the 450° to about 475°F range, an appreciable amount of the phosphates (the orthophosphates) are converted and are further dehydrated to pyrophosphates $H_2P_2O_7^{-2}$ or $P_2O_7^{-4}$. As the exposure temperature is further increased significantly into the 1200° to about 1300°F range, metaphosphates can be formed. This situation may occur in special situations, as for instance, with aluminum-filled coatings.

It may be noted that while the curing temperature may be in the ranges indicated, the metal coated with cured coating at the lower temperature, e.g. up to about 375°F or 485°F may be exposed to the higher temperature ranges during subsequent conditions of use. The phosphate forms (e.g. orthophosphates, pyrophophates and metaphosphates) are therefore not always present exclusively of each other and the phosphate of a cured coating will progressively dehydrate upon further exposure to heat to convert at least in

part under appropriate conditions, to the other forms of phosphates as described above.

This is an unusual aspect of the coatings and coated parts of the invention. For conventional coatings generally the coated part should not be exposed to temperatures higher than the temperature at which the coating was applied if a satisfactory coating is to be preserved. In contrast, in accordance with the invention, the coated part can (and even normally is) be exposed during use to temperatures higher than the curing temperature.

For additional descriptions of phosphate forms at different degrees of thermal exposures reference is made to Advanced Inorganic Chemistry, Cotton and Wilkinson, 4th Ed., John Wiley & Sons, especially pps. 472-478, which are incorporated herein by reference.

The coating of the invention on the active metal may be defined as a partially dehydrated orthophosphate residue of the phosphate salts used in the acid solution, pyrophosphates (acid and/or normal) or metaphosphates.

With respect to the resin, the high curing temperatures may cause some or all of the polymeric portion of the coating resin to decompose. But unexpectedly, notwithstanding the teachings of the prior art such decomposition of the polymer does not adversely affect the outward coating. In those situations the residue that remains is essentially then a polymeric condensation product of the phosphate salts (as further discussed above) and other coating additives such as pigments.

In addition to the dehydration of the phosphate structure it is anticipated that the resin portion of the composition further melts and flows and/or sinters to the substrate material and to the phosphate structure and other coating constituents. This improves the adhesive and cohesive strength of the coating film and improves the corrosion resistance.

The use of phosphate bonding in conjunction with polymer bonding especially with passivating agents as discussed further below produces superior coating films particularly on zinc surfaces. Because zinc is chemically active, bonding coatings to zinc surfaces is extremely difficult. The coating compositions of this invention are suitable for providing long term protection to zinc surfaces.

It has been found that in addition to the essential ingredients discussed above the use of passivating agents is often desirable in preparing the stable corrosion resistant films on the active metals in accordance with the invention. To minimize the acid phosphate of the coating to chemically attack the aluminum or zinc or cadmium surface (or even the metallic pigments which are optionally present in the coating), the presence of inhibitors in the cured film is helpful in protecting the active metal surface from corrosion. Those inhibitors which are the most desirable in accordance with the invention are those which are stable in the acid phosphate salt solution and which do inhibit corrosion before and/or after exposure to the elevated temperature necessary for the cure in accordance with the invention.

The inhibitors can commonly be dichromate ion which can have as its source chromic acid or soluble metal chromate or dichromate. Because of the chemical equilibrium relationship of dichromate ions and chromate ions, these terms are used interchangeably. In all cases the coating compositions are acidic, having pH values less than about 4.

The role of the chromate ion is to passivate the substrate, e.g., zinc, aluminum or other active metals and allow the phosphate and resin bonding mechanisms to properly form. As a result it has been discovered that, contrary to the prior art it is highly desirable to maintain ration of phosphate to chromate so that the weight percent of phosphate ion always exceeds the weight percent of chromate ion. Additionally, contrary to the prior art it has also been found that reduction of the chromate from hexavalent to trivalent is not required nor is it desirable. As a result it is a teaching of this invention to avoid the use of solvents or reducing agents to the compositions to provide high concentrations of trivalent chromium in the coating. Such additives are not required or desired.

Other passivating materials may include molybdate ion from $MO_3$ or soluble metal molybdate as well as trivalent chromium ions.

In addition it has been found that various leachable corrosion inhibitor pigments may be used without detrmentally affecting the basic acidic phosphate salt solution. Such leachable pigments include illustratively the following: basic aluminum zinc phosphate, basic zinc phosphate, zinc hydroxy phosphite, basic zinc molybdate, barium metaborate, basic lead silico chromate, calcium ferrite, manganese oxide ($Mn_3O_4$), strontium chromate, barium chromate, zinc chromate, zinc tetroxy chromate, zinc potassium chromate, basic zinc chromate, and zinc yellow and other similar pigments with equivalent function.

It will be noted that the leachable pigments appear to be functioning in a similar manner as is disclosed in U.S. Patent Application Serial No. 777,228, entitled Coating Composition. This patent application is incorporated herein by reference. That patent application discloses coating compositions which contain undissolved unreacted solid hexavalent chromium compounds (salts) which are leachable pigments. Phosphate ions along with chromate or molybdate ions are present in the aqueous portion of the coating slurry. Preferably the pigments should be stable at the low acid pH values specified herein and at the curing temperatures called for in accordance with the invention.

Typical pigments for the compositions include the following; titanium dioxide, carbon black, chrome oxide green, aluminum flake (leafing and non leafing), copper chromite black spinel, mixed copper chrome oxide black, mixed iron chrome oxide black, mixed cobalt chrome oxide black, and mixed manganese copper chrome oxide black, and other suitable pigments.

Various other additives may be added to the composition such as surfactants, organic solvents and other

coalescing aids, defoamers, fillers, and viscosity control materials. However, the use of the solvents should not be in excess of 20% so that essentially the phosphate composition is virtually only an aqueous composition.

The compositions of the invention have pH which is preferably in the pH range from about 0 to about 4.0, although values above 4 may also be acceptable under special circumstances. The upper limit in functional terms is the pH at which an adherent film is not formed when the coating is thermally cured.

The total solid contents by weight of the coating compositions of the invention ranges from about 10 to about 70% by weight. The preferred range is from about 25% to about 45% by weight. The ratio of phosphate solids to resin solids by weight ranges from about 0.2 to 1.0 (phosphate to resin) to about 25 to 1.0 (phosphate to resin). A preferred range is from about 1.0 to 1.0 (phosphate to resin) to about 4.0 to 1.0 (phosphate to resin). Such preferred range information is dependent on the density of the resin.

If a corrosion inhibitor is included in the composition, the concentration of the soluble corrosion inhibitor will be not more than the concentration of the soluble phoshate in the binder solution. The molar ratio of phosphate to chromate expressed as moles $PO_4$ to moles $CrO_3$ is at least 1 to 1, preferrably 2 to 1. Other soluble inhibitors may be present but molar concentrations of phosphate will exceed molar concentrations of soluble inhibitor.

As far as corrosion inhibiting pigments are concerned, concentrations of pigments can vary widely as with any other pigmets. Pigments can be utilized in the range of about 1 to about 60% by-weight the amount being dependent on pigment density, resin density and other factors.

The coatings of the invention are prepared by mixing the various components in accordance with generally accepted practices.

To maintain suitable ratios of phosphate to resin solids, special care must be taken in mixing the phosphate solutions. As the latex or resin dispersions being used decreases in solids content, the phosphate/inhibitor solution must increase in solids content to maintain phosphate/resin solids ratios. Such high solids phosphate solutions are syrup-like in consistency and present manufacting difficulties. The problem has been even aggravated when the liquids are thixotropic in accordance with the invention as explained herein above.

Accordingly, a method has been developed which is particularly applicable when the solid content of the aqueous constituent is desired to be high as in the range of 40 to 65% and when the solids content of the latex composition is comparatively low as in the range of 10% to about 25%. In those instances it is an aspect of the invention, that the aqueous phosphate composition which when manufactured has a water-thin viscosity, be spray-dried or dried in any suitable manner. The powder is advisably reduced to even a finer powder by conventional methods such as grinding. The resulting powder comprises the inorganic constituents described above (e.g. phosphate or phosphate salts and corrosion inhibitor) and is then suitable for addition to the resin containing liquids, that is the latex, the emulsion or solution and the like. The powder at least partially dissolves and the binder solids are then in solution. Any pigment or other material which is desired to be added can then be readily suspended in the liquid coating composition.

A particularly interesting aspect of the invention is for the coating compositions to be thixotropic. In that regard the teaching of U.S. Patents 4,544,408 and 4,548,646 are useful, particularly when the coating is intended for dip/spin applications on the metal parts to be coated. These disclosures are incorporated herein.

The following examples illustrate the compositions, the coating, the coated article, the method, and other aspects of the invention. They are not to be construed as a limitation on the invention.

EXAMPLE 1

Three coating compositions were made by adding increasing amounts of polyvinylidene fluoride latex to binder I. Formulas for the coatings are as follows:

BINDER 1
3220 ml Deionized water
570 ml 85% Phosphoric Acid
450 ml Magnesium Carbonate
Coating A 100 ml Binder I
6.15 gm Polyvinylidene fluoride latex (Kynar 32, Pennwalt Corp)
Coating B 100 ml Binder I
38.6 gm PVF K-32
Coating C 100 ml Binder I
323 gm K-32

These compositions were applied to degreased galvanized steel and chromate conversion coating treated 3003 H14 aluminum test panels. The coatings were dried for 15 minutes at 175°F then cured at 525°F for 30 minutes. They were subjected to physical and environmental testing along with specimens coated with Binder I only that had been modified by the addition of solvent and surfactants in order to make it sprayable. All coatings were of similar thickness, 5 µm. The following table lists the results of the testing.

| Coating | ASTM D 522 Conical Mandrel Bend Test | ASTM D 2794 80 in. lb. Reverse Impact | OLSEN Formeability test .020 in. draw | ASTM B 117 24 hrs. 5% Salt Spray |
|---|---|---|---|---|
| Phosphate Binder I | 3 | 3 | 3 | 3 |
| Example 1A | 2 | 2 | 2 | 3 |
| Example 1B | 1 | 1 | 1 | 3 |
| Example 1C | 1 | 1 | 1 | 1 |

Test Results include galvanized steel and aluminum specimens. Relative Ranking: 1 = Best, 3 = worst.

In all tests, the addition of resin solids improved adhesion, flexibility and corrosion resistance of the applied coatings. Less resin content was needed to improve the physical test results than was needed to improve corrosion resistance. The examples represent 1, 5, and 15% resin content respectively by weight of the total coating composition.

The composition of the coatings was as follows:

| Follows Coating Example | % Solids by Weight | Resin Content % by Weight | Phosphate to Resin Ratio by Weight |
|---|---|---|---|
| Phosphate binder | 22.4 | 0 | --- |
| Example 1A | 22.3 | 1 | 21.2 |
| Example 1B | 21.95 | 5 | 3.4 |
| Example 1C | 21.1 | 15 | 0.4 |

EXAMPLE 2

The following ingredients were mixed:
100 ml Binder I (from example 1)
3 ml Carbon black (Regal 400R)
115 ml Polyvinylidene fluoride latex, K-32
10 gm 2.5% solution in water of NatroSol 250 MBR hydroxy ethylcellulose

The carbon black pigment was stirred into the binder solution and the resin latex and resin solution were added. The mixed coating contains 10% by-weight polyvinylidene fluoride resin solids and has a phosphate solids to latex resin solids ratio of 1.0 to 1.0. The soluble resin contributes 0.1% of total coating weight and improves the application properties of the coating.

The coating was dip/spin applied to ferrous fasteners that had been previously coated with an aluminum filled coating described in Example 1 of U.S. Patent 4,548,646. The black coating film was cured at 525°F for 20 minutes. The coated film showed excellent corrosion resistance and resisted chipping when inserted into a steel panel.

EXAMPLE 3

100 ml Binder I (from example 1)
42 ml Acrylic latex UCAR 4362 (Union Carbide)

This composition contained 12.9% resin by weight and had a phosphate solid to resin solids ratio of 1.27 to 1.0.

The composition was sprayed onto galvanized steel panels and cured at 400°F for 30 minutes. The coating was adherent and corrosion resistant and uniformly glossy black. Such a composition is also suitable for application to steel fasteners coated with active metals as described in Example 2. Unexpectedly, the coating provided a uniform black film without pigment addition.

EXAMPLE 4

An acidic phosphate binder composition was prepared by mixing the following ingredients.

Binder IV 3220 ml Deionized Water
650 ml 75% Phosphoric acid
380 gm Zinc oxide

Binder compositions using other metal oxides such as aluminum oxide or magnesium oxide could be used in place of the zinc oxide. Also, materials such as zinc or magnesium carbonate could also be used to prepare the binder composition.

A coating composition was prepared by stirring the ingredients listed in the following formula.

62.5 ml Binder IV
7.8 ml Copper chromite black spinel, Harshaw 7890
10.9 gm Basic zinc aluminum phosphate, Heucophos ZPA, Heubach Chemicals
31.25 gm Polyvinylidene fluoride latex, K-32
1.0 gm Fumed silica, Cab-O-Sil M5
5 ml Cellosolve acetate

The composition illustrates the use of inert pigments along with a small quantity of miscible organic solvent to improve spraying characteristics. The composition utilizes a leachable corrosion inhibiting pigment in conjunction with the phosphate and resin. The basic zinc aluminum phosphate represents 25.4% of the total solids while total pigment represents 43.5% of the total solids. Resin content is 5.4% of coating weight and phosphate to resin ration is 2.3 to 1.0 by weight.

This composition was sprayed onto commercial large spangle galvanized steel panels and cured at 450°F for 30 minutes.

Coated specimens have improved formability and corrosion resistance.

EXAMPLE 5

The following phosphate binder was made.

Binder II 250 ml Deionized Water
150 ml 85% Phosphoric Acid
20 gm Calcium Molybdate
40 gm Magnesium Carbonate

In this binder, magnesium carbonate is used as a convenient magnesium ion source. Magnesium oxide or hydroxide could also be used. Similarly, zinc oxide, hydroxide, or carbonate are suitable additions as is aluminum hydroxide. It is clear that addition of ingredients may vary when different ion sources are employed.

Coating 5 50 ml Binder II
50 ml Distilled water
20 ml Vinyl acetate/acrylic copolymer AMSCO 3077, Union Chemical

The composition was prepared by simple mixing of ingredients. This coating has a phosphate to resin ratio of 2.18 to 1.0 by weight and a molar ratio of phosphate to molybdate, expressed as $MoO_3$ of 31.7 to 1.0.

The coating was sprayed onto an aluminum casting and cured at 400°F for 30 minutes. The coating showed good adhesion and improved corrosion resistance.

EXAMPLE 6

A composition was prepared as follows:

50 ml Binder II
50 ml Deionized Water
2 ml Fumed silica, Cab-O-Sil M5
20 ml Acrylic latex, UCAR 4550, Union Carbide

This composition is similar to Example 5 using an acrylic latex with similar ratios of phosphate to resin. The coating was sprayed onto zinc die castings that had been pretreated with Galvbrite 1121 and cured at 400°F for 30 minutes. The coating exhibited good adhesion and improved corrosion resistance.

EXAMPLE 7

A binder solution having the following ingredients was prepared.

700 ml Distilled water
20 ml Magnesium oxide
114 gm Chromic acid
200 ml 85% phosphoric acid
44 gm Fumed silica

To this binder, the following resin dispersion was added.

900 ml Distilled water
150 gm Polyvinylidene fluoride, K-301F, Pennwalt
2.5 ml Nonionic surfactant, Igepal 630
1.0 ml Defoamer, Troykyd 999

A similar composition can be obtained by using 850 ml of K-32 polyvinylidene fluoride latex in place of the resin dispersion. The phosphate to resin ratio is 2.14 to 1.0 by weight. The ratio of phosphate to soluble

chromate inhibitor is 2.8 to 1.0.

This composition was dip-spin applied to zinc plated screws. Two coats were applied, each being cured at 525°F for 30 minutes. coated fasteners were capable of resisting 5% salt spray per ASTM B117 for 1000 hours without red rust. Similar results were achieved on cadmium plated fasteners and steel fasteners coated with ion vapor deposited aluminum. Uncoated zinc plated fasteners showed red rust after 100 hours salt spray exposure.

EXAMPLE 8

To the mixed composition of Example 7, 30 gm of zinc chromate was added by stirring. The composition was spray applied to zinc die castings that had been Galvbrite 1121 treated. The coating was cured at 480°F for 30 minutes. Coatings utilizing this composition show superior exterior exposure protection.

EXAMPLE 9

An aqueous acidic binder composition was prepared by mixing the following ingredients.

Binder IX 322 ml Distilled water
37.8 ml 85% Phosphoric acid
6.5 gm Magnesium oxide
13.6 gm Magnesium carbonate
9.9 gm Chromic acid
2.5 gm Aluminum hydroxide
175 gm Spray dried binder (composition given below)

The spray dried binder composition is prepared by spray drying using conventional techniques the following composition:

80.5 ml Deionized water
22.1 ml 85% Phosphoric acid
9.2 gm Chromic acid
7.25 gm Magnesium oxide

After spray drying, the composition is ground to a fine powder.

The following ingredients were added to the Binder IX composition:

95.7 gm Black oxide pigment, copper chromite spinel
4.8 gm Carbon black
0.04 gm Surfactant, Fluorad FC-95, 3M Co.
47.7 gm Water-soluble polymer, Rheothik 80-11

This composition demonstrates the use of soluble resin in the phosphate binder containing soluble hexavalent chromium as inhibitor. The composition was dip/spin applied to steel fasteners that were already coated with an aluminum ceramic coating conforming to MIL-C-81751B type 1 class 4. Following application, the coating was cured at 550°F for 10 minutes. The coated fasteners were exposed to 700°F for 250 hours then exposed to salt spray per ASTM B 117 for 100 hours. The fasteners showed no evidence of discoloration or corrosion, remaining glossy black throughout the testing cycle.

EXAMPLE 10

The following binder composition was prepared:

Binder X 240 ml Deionized water
130 ml 85% Phosphoric acid
70 gm Chromic acid ($CrO_3$)
46.5 gm Magnesium oxide
20 gm Aluminum hydroxide

The following coating composition was then prepared:

30 ml Binder X
20 ml Distilled water
50 ml Vinyl-acrylic copolymer, UCAR 4362 Union Carbide
50 ml Polyvinylidene Fluoride latex, K-32 Pennwalt
2.4 gm Rheothik 80-11 water-soluble polymer, Henkel Corp.

The materials were mixed to give a liquid composition which was dip/spin applied to zinc-plated steel fasteners and cured 10 minutes @ 550°F. Submission to salt spray (ASTM B117) for 500 hours showed no red rust.

EXAMPLE 11

Example 10 was prepared without the water-soluble polymer addition. The coating composition was spray applied to commercial galvanized steel panels and cured at 525°F for 30 minutes. The coating shows superior formability and corrosion resistance.

Illustrative, but not inclusive, of the type of useful water-insoluble polymer resins for use in the instant invention are the latex polyethylene and polytetrafluoroethylene resins disclosed in U.C. Patent 4,411,950; the epoxy, vinyl and alkyd resins disclosed in U.S. Patent 3,713,904; the acrylic polytetrafluoroethylene, and butadiene styrene resins disclosed in U.S. Patent 3,053,702; the non-waxy hydrophobic resins disclosed in

U.S. Patent 3,053,693; the acrylic resins disclosed in U.S. Patent 4,006,041; the acrylic emulsion resins disclosed in U.S. Patent 4,183,772; the emulsion resins disclosed in U.S. Patent 4,084,014; the polytetrafluoroethylenes disclosed in U.S. Patents 3,785,854 and 3,352,814; the dispersed acrylic resins disclosed in U.S. Patent 4,373,968; and the water dispersed acrylic, polyvinyl chloride, epoxy, mixed epoxy acrylic, polyester and polyurethane resins disclosed in U.S. Patent 4,266,988. All these above mentioned patents are incorporated herein by reference.

Although the foregoing invention has been described in some detail by way of illustration and example for purposes of clarity of understanding, it will be obvious to one skilled in the art that certain changes and modifications may be practiced which are equivalent or variations of the subject matter of the appended claims.

## Claims

1. An aqueous acidic phosphate solution for heat-curable coatings and for imparting long-term improved corrosion resistance especially to active metal surfaces, which acidic solution includes as essential components : (a) a water-soluble phosphate acidic salt and (b) a polymeric resin, which resin is in solution or in dispersion in the acid phosphate solution.

2. The aqueous acidic phosphate solution of claim 1 which includes a water-soluble corrosion inhibitor, with the provisio that the bond-forming phosphate ion is present in at least a molar concentration equal to the corrosion inhibitor.

3. The aqueous acidic phosphate solution of claim 2 wherein the water-soluble corrosion inhibitor is selected from the group consisting of chromate, more particularly dichromate and molybdate.

4. The aqueous acidic phosphate solution of claim 3 wherein the solution also includes chromium either in the trivalent state, or all in the hexavalent state.

5. The aqueous acidic phosphate solution of claim 3 which is free of chromate reducing compounds, which compounds are capable of reducing the hexavalent chromium to a lower valence.

6. The aqueous acidic phosphate solution of claim 3 wherein the molar ratio of phosphate to chromate or molybdate ions is at least 2 to 1.

7. The aqueous acidic phosphate solution of claim 2 which has a pH in the range of about 0 to about 4.

8. The aqueous acidic phosphate solution of anyone of claims 2, 3 which also comprises an acid-stable, leachable corrosion inhibitor pigment selected from the group consisting of : basic aluminum zinc phosphate, basic zinc phosphate, zinc hydroxy phosphite, basic zinc molybdate, barium metaborate, basic lead silico chromate, calcium ferrite, manganese oxide, strontium chromate, zinc chromate, basic zinc chromate and zinc yellow.

9. The aqueous acidic phosphate solution of anyone of claims 1, 3, 5, 6, 7, 8, wherein the ratio of phosphate to resin solids ranges from about 0.2 to about 1.0 and from about 25 to about 1.0 by weight, more particularly from 1.0 to 1.0 to about 4.0 to 1.0.

10. The aqueous acidic phosphate solution of claim 2 wherein the total solids content ranges from about 10 to about 70% by weight.

11. The aqueous acidic phosphate solution of anyone of claims 1 to 4 which includes a water-soluble resin selected from the group consisting of synthetic sulfonates, hydroxyethyl cellulose, polysaccharides and sodium alginates.

12. The aqueous acidic phosphate solution of anyone of claims 1, 2, 3, 8, 11 which includes a water-insoluble resin selected from the group consisting of polyolefins, polyvinyl acetate-acrylate copolymers, more particularly vinyl acetate acrylic and methacrylic polymers more particularly acrylic latex and polyvinyl and polyvinylidene halide polymers, more particularly polyvinylidene fluoride.

13. An aqueous acidic phosphate solution for heat-curable coatings and for imparting long-term improved corrosion resistance especially for active metal surfaces, the solution having a pH in the range of about 0 to about 4 and which solution essentially consists of a water-soluble phosphate acidic salt and a polymeric resin selected from the group consisting of water-soluble and water-insoluble, acid-stable resins and a water-soluble corrosion inhibitor selected from the group consisting of chromate and molybdate, with the proviso that the molar ratio of said phosphate ion to corrosion inhibitor is about 2 to 1, which solution is free of a compound capable of reducing the hexavalent chromium compound to a lower valence, which solution also includes an acid stable leachable corrosion inhibitor selected from the group consisting of : basic aluminum zinc phosphate, basic zinc phosphate, zinc hydroxy phosphite, basic zinc molybdate, barium metaborate, basic lead silico chromate, calcium ferrite, manganese oxide, strontium chromate, zinc chromate, basic zinc chromate and zinc yellow and wherein the ratio of phosphate to resin solids ranges from about 1.0 to 1.0 to about 4.0 to 1.0 by weight.

14. The aqueous acidic phosphate solution of claim 1 wherein the water-insoluble resins are a polyvinylidene fluoride and a vinyl-acrylic copolymer.

15. A metal part which has an active metal surface selected fron the group consisting of zinc, cadmium and aluminum coated with a heat-cured phosphate residue selected from at least one of the groupe consisting of partially dehydrated orthophosphates, pyrophosphates and metaphosphates and a residue

of a polymeric water-insoluble or water-soluble resin, which coating has improved long-term corrosion resistance and improved physical properties.

16. The metal part of claim 15 wherein the heat-cured phosphate residue also includes the residue of a water-soluble corrosion inhibitor more particularly chromium or molybdenum, with the proviso that the residue of the phosphate is present in at least an amount equal to the residue of the corrosion inhibitor.

17. The metal part of claim 16 wherein the residue also includes either a trivalent chromium residue, or a total hexavalent residue.

18. The metal part of anyone of claims 15, 16, 17 wherein the residue also includes a residue of an acid-stable, leachable corrosion inhibitor pigment selected from the group consisting of : basic aluminum zinc phosphate, basic zinc phosphate, zinc hydroxy phosphite, basic zinc molybdate, barium metaborate, basic lead silico chromate, calcium ferrite. manganese oxide, strontium chromate, zinc chromate, basic zinc chromate and zinc yellow.

The metal part coverded by the composition of claim 13 which is one of the following : cadmium plated steel fasteners, ferrous fasteners coated with ion vapor deposited alumium, zinc die castings, zinc plated ferrous screws, aluminum/ceramic coated steel fasteners and galvanized steel.

20. The metal part of anyone of claims 15, 18 wherein the phosphate residue is a partially dehydrated orthophosphate residue.

21. The metal part which has an active metal surface selected from the group consisting of zinc, cadmium and aluminum coated with a coating which is a heat-cured phosphate residue selected from at least one of the group consisting of partially dehydrated orthophosphates, pyrophosphates and metaphosphates and a residue of a polymeric water-insoluble or water-soluble resin, a residue of a water-soluble corrosion inhibitor, with the proviso that the phosphate residue is present in an amount at least twice that of the corrosion inhibitor residue, and a residue of an acid stable, leachable corrosion inhibitor pigment selected from the group consisting of : basic aluminum zinc phosphate, basic zinc phosphate, zinc hydroxy phosphite, basic zinc molybdate, barium metaborate, basic lead silico chromate, calcium ferrite, manganese oxide, strontium chromate, zinc chromate, basic zinc chromate and zinc yellow.

European Patent Office

# EUROPEAN SEARCH REPORT

Application number

EP 87 40 1677

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 044 654 (I.C.I. LTD.)<br>* Claims 1-5 * | 1,9 | C 23 C 22/74<br>C 09 D 5/08 |
| X | EP-A-0 147 273 (SERMATECH INTERNATIONAL INC.)<br>* Claims 1-4,10-14,18,20,21; example 8 * | 1-10, 12-14 | |
| X | EP-A-0 145 580 (SERMATECH INTERNATIONAL INC.)<br>* Claims 1-3,10-15,18,20,21 * | 1-10, 12-14 | |
| A | GB-A-1 152 951 (NIPPON KOKAN KABUSHIKI KAISHA)<br>* Claim 1; page 3, table 1 * | 2-7,9 | |
| A | FR-A-2 148 145 (SOCIETE CONTINENTALE PARKER)<br>* Claims 1,7,8 * | 2,12 | **TECHNICAL FIELDS SEARCHED (Int. Cl.4)**<br>C 23 C<br>C 09 D |

The present search report has been drawn up for all claims

| Place of search | Date of completion of the search | Examiner |
|---|---|---|
| THE HAGUE | 19-10-1987 | DE ANNA P.L. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document